# EUROPEAN PATENT SPECIFICATION

(11) **EP 2 663 008 B1**
(45) Date of publication and mention of the grant of the patent: **11.05.2016**
(21) Application number: 12803396.6
(22) Date of filing: 20.06.2012
(51) Int. Cl.: H04L 1/18, H04W 72/12, H04W 72/04, H04L 5/00

(54) **METHOD, USER EQUIPMENT AND BASE STATION FOR INFORMATION TRANSMISSION IN TIME DIVISION DUPLEX SYSTEM**
VERFAHREN, BENUTZERVORRICHTUNG UND BASISSTATION ZUR INFORMATIONSÜBERTRAGUNG IN EINEM ZEITTEILUNGS-DUPLEXSYSTEM
PROCÉDÉ, ÉQUIPEMENT UTILISATEUR ET STATION DE BASE POUR TRANSMISSION D'INFORMATIONS DANS UN SYSTÈME DE DUPLEXAGE PAR RÉPARTITION TEMPORELLE

(30) Priority: 20.06.2011 CN 201110166072
(43) Date of publication of application: 13.11.2013
(73) Proprietor: Huawei Technologies Co., Ltd., Longgang District Shenzhen, Guangdong 518129 (CN)
(72) Inventor: GUAN, Lei, Shenzhen Guangdong 518129 (CN); LV, Yongxia, Shenzhen Guangdong 518129 (CN); CHEN, Xiaobo, Shenzhen Guangdong 518129 (CN)
(74) Representative: Thun, Clemens
(86) International application number: PCT/CN2012/077238
(87) International publication number: WO 2012/175020

(56) References cited:
- EP-A1- 2 672 775
- WO-A1-2010/049584
- CN-A- 101 729 128
- CN-A- 101 841 846
- CN-A- 101 877 881
- CN-A- 101 883 401

## Description

### TECHNICAL FIELD

The present invention relates to the TDD field, and in particular, to a method for transmitting information in a time division duplexing system, a user equipment, and a base station.

### BACKGROUND

In a TDD (Time Division Duplexing, time division duplexing) system, uplink is separated from downlink with respect to time, and data is received and sent at different time in a same frequency band. An LTE (Long Term Evolution, long term evolution) TDD system may support 7 different TDD uplink/downlink configurations, where in each configuration, which sub-frame in 10 sub-frames of a radio frame is an uplink sub-frame, and which sub-frame is a downlink sub-frame are specifically provided. Which TDD uplink/downlink configuration is specifically adopted by an eNB (Evolved NodeB, evolved base station) may be notified to a UE (User Equipment, user equipment) through a broadcast message.

An uplink HARQ (Hybrid Automatic Repeat Request, hybrid automatic repeat request) process in the LTE TDD system is as follows: An eNB indicates, to a UE, scheduling information such as time-frequency resource allocation of a currently scheduled PUSCH (Physical Uplink Shared Channel, physical uplink shared channel) through an uplink scheduling grant UL_grant in a PDCCH (Physical Downlink Control Channel, physical downlink control channel), the UE correspondingly sends the currently scheduled PUSCH to the eNB according to the UL_grant, and the eNB feeds back a PHICH (Physical HARQ Indicator Channel, physical HARQ indicator channel) to the UE, indicating that the PUSCH is correctly or incorrectly received, where if the PUSCH is incorrectly received, the UE correspondingly initiates uplink retransmission.

The UL_grant has a fixed time sequence relationship with the PUSCH scheduled by the UL_grant, and the time sequence relationship indicates that a PUSCH of a current uplink sub-frame is scheduled by a UL_grant on which downlink sub-frame. The PUSCH also has a fixed time sequence relationship with the PHICH corresponding to the PUSCH, and the time sequence relationship indicates that a PHICH corresponding to a PUSCH of a current uplink sub-frame is sent on which downlink sub-frame.

The LTE TDD system has different versions. Some versions support only one carrier, where an eNB and a UE communicate on the one carrier. Some versions support a CA (Carrier Aggregation, carrier aggregation) technology, where an eNB and a UE may communicate on multiple carriers. The CA technology may simultaneously allocate multiple CCs (Component Carrier, component carrier) to a UE for supporting transmission at a higher data rate. An LTE TDD version supporting the CA further supports a cross-carrier scheduling mechanism under the CA, that is, a PDCCH and a PHICH corresponding to data on one carrier may be borne on another carrier. However, currently the version only supports carrier aggregation where carriers all have a same TDD uplink/downlink configuration, for example, supports aggregation of two carriers whose TDD uplink/downlink configurations all are configuration 1, but does not support aggregation of two carriers whose TDD uplink/downlink configurations are configuration 1 and configuration 2 respectively. Such a system is known from the patent application CA 2 780 390 A1.

When in the LTE TDD system, a version supporting carrier aggregation where carriers have different TDD uplink/downlink configurations appears, see for example the 3GPP technical document "Support of Mixed Inter-Band TDD Configurations in Rel-11CA", if it is a scenario where a PDCCH and a PHICH corresponding to data on a secondary carrier is borne on a primary carrier for cross-carrier scheduling, and a scheduling time sequence of a PUSCH of a certain uplink sub-frame of the secondary carrier is different from an uplink scheduling time sequence of the primary carrier, but keeps an uplink scheduling time sequence of the secondary carrier, after the PUSCH of the uplink sub-frame of the secondary carrier is scheduled by a UL_grant of a certain corresponding downlink sub-frame on the primary carrier, for the PUSCH sent by a UE on the uplink sub-frame, an eNB needs to feed back, on the downlink sub-frame, a corresponding PHICH to the UE. However, if the downlink sub-frame of the primary carrier does not have a PHICH resource which is identifiable to a UE in an LTE TDD system of a lower version, it is caused that the eNB cannot feed back the PHICH to the UE, or an additional PHICH resource which is unidentifiable to the UE in the LTE TDD system of a lower version needs to be reserved, thereby causing an increase in an overhead.

### SUMMARY

Embodiments of the present invention provide a method for transmitting information in a time division duplexing system, a user equipment, and a base station, which solve a problem in the prior art that an eNB cannot feed back a PHICH or an overhead is increased.

In one aspect, a method for transmitting information in a time division duplexing TDD system includes:
receiving, by a user equipment UE and on a first carrier of a time division duplexing TDD system, an uplink scheduling grant sent by a base station;
sending, by the UE, according to the uplink scheduling grant and in a first sub-frame on a second carrier of the TDD system, a physical uplink shared channel PUSCH scheduled by the uplink scheduling grant; and
receiving, by the UE and in a second sub-frame, a physical hybrid automatic repeat request indicator channel PHICH which corresponds to the PUSCH and is sent by the base station, where
the first carrier and the second carrier have different TDD uplink/downlink configurations;
the second sub-frame is a sub-frame on the first carrier and has a backward compatible PHICH resource, or the second sub-frame is a sub-frame on the second carrier and has a backward compatible PHICH resource; and
the backward compatible PHICH resource is a PHICH resource which is identifiable to a UE in a TDD system whose version is lower than that of the TDD system.

In another aspect, a method for transmitting information in a time division duplexing TDD system includes:
receiving, by a user equipment UE and on a first carrier of a time division duplexing TDD system, an uplink scheduling grant sent by a base station;
sending, by the UE, according to the uplink scheduling grant and in a first sub-frame on a second carrier of the TDD system, a physical uplink shared channel PUSCH scheduled by the uplink scheduling grant, where the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9; and
determining, by the UE, not to receive a physical hybrid automatic repeat request indicator channel PHICH corresponding to the PUSCH.

In still another aspect, a method for transmitting information in a time division duplexing TDD system includes:
sending, by a base station and on a first carrier of a time division duplexing TDD system, an uplink scheduling grant to a user equipment UE;
receiving, by the base station, a physical uplink shared channel PUSCH which is scheduled by the uplink scheduling grant and is sent by the UE in a first sub-frame on a second carrier of the TDD system; and
sending, by the base station and in a second sub-frame, a physical hybrid automatic repeat request indicator channel PHICH corresponding to the PUSCH to the UE, where
the first carrier and the second carrier have different TDD uplink/downlink configurations;
the second sub-frame is a sub-frame on the first carrier and has a backward compatible PHICH resource, or the second sub-frame is a sub-frame on the second carrier and has a backward compatible PHICH resource; and
the backward compatible PHICH resource is a PHICH resource which is identifiable to a UE in a TDD system whose version is lower than that of the TDD system.

In yet another aspect, a method for transmitting information in a time division duplexing TDD system includes:
sending, by a base station and on a first carrier of a time division duplexing TDD system, an uplink scheduling grant to a user equipment UE;
receiving, by the base station, a physical uplink shared channel PUSCH which is scheduled by the uplink scheduling grant and is sent by the UE in a first sub-frame on a second carrier of the TDD system, where the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9; and
determining, by the base station, not to send a physical hybrid automatic repeat request indicator channel PHICH corresponding to the PUSCH to the UE.

In another aspect, a user equipment includes:
a first receiving module, configured to receive, on a first carrier of a time division duplexing TDD system, an uplink scheduling grant sent by a base station, and receive, in a second sub-frame, a physical hybrid automatic repeat request indicator channel PHICH which corresponds to a PUSCH and is sent by the base station; and
a first sending module, configured to send, according to the uplink scheduling grant received by the first receiving module and in a first sub-frame on a second carrier of the TDD system, the physical uplink shared channel PUSCH scheduled by the uplink scheduling grant, where
the first carrier and the second carrier have different TDD uplink/downlink configurations;
the second sub-frame is a sub-frame on the first carrier and has a backward compatible PHICH resource, or the second sub-frame is a sub-frame on the second carrier and has a backward compatible PHICH resource; and
the backward compatible PHICH resource is a PHICH resource which is identifiable to a UE in a TDD system whose version is lower than that of the TDD system.

In another aspect, a user equipment includes:
a second receiving module, configured to receive, on a first carrier of a time division duplexing TDD system, an uplink scheduling grant sent by a base station, and determine not to receive a physical hybrid automatic repeat request indicator channel PHICH corresponding to a PUSCH; and
a second sending module, configured to send, according to the uplink scheduling grant received by the second receiving module and in a first sub-frame on a second carrier of the TDD system, the physical uplink shared channel PUSCH scheduled by the uplink scheduling grant, where
the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9.

In another aspect, a base station includes:
a third sending module, configured to send, on a first carrier of a time division duplexing TDD system, an uplink scheduling grant to a user equipment UE, and send, in a second sub-frame, a physical hybrid automatic repeat request indicator channel PHICH corresponding to a PUSCH to the UE; and
a third receiving module, configured to, after the third sending module sends the uplink scheduling grant, receive the physical uplink shared channel PUSCH which is scheduled by the uplink scheduling grant and is sent by the UE in a first sub-frame on a second carrier of the TDD system, where
the first carrier and the second carrier have different TDD uplink/downlink configurations;
the second sub-frame is a sub-frame on the first carrier and has a backward compatible PHICH resource, or the second sub-frame is a sub-frame on the second carrier and has a backward compatible PHICH resource; and
the backward compatible PHICH resource is a PHICH resource which is identifiable to a UE in a TDD system whose version is lower than that of the TDD system.

In another aspect, a base station includes:
a fourth sending module, configured to send, on a first carrier of a time division duplexing TDD system, an uplink scheduling grant to a user equipment UE, and determine not to send a physical hybrid automatic repeat request indicator channel PHICH corresponding to a PUSCH to the UE; and
a fourth receiving module, configured to, after the fourth sending module sends the uplink scheduling grant, receive the physical uplink shared channel PUSCH which is scheduled by the uplink scheduling grant and is sent by the UE in a first sub-frame on a second carrier of the TDD system, where
the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9.

Beneficial effects brought by the technical solutions provided by the embodiments of the present invention are as follows: In a cross-carrier scheduling scenarios where multiple carriers have different TDD uplink/downlink configurations, a UE receives a PHICH by using a sub-frame having a backward compatible PHICH resource, and a base station sends the PHICH by using a sub-frame having a backward compatible PHICH resource, thereby implementing sending and receiving of the PHICH, and solving problems in the prior art that a PHICH cannot be fed back because there is no backward compatible PHICH resource and an overhead is increased because a non-backward compatible PHICH resource is reserved. Moreover, in the technical solutions provided by the embodiments of the present invention, it is not required to reserve a non-backward compatible PHICH resource, and the PHICH is transmitted by adopting a backward compatible PHICH resource, thereby saving an overhead of a PHICH resource.

### BRIEF DESCRIPTION OF DRAWINGS

FIG 1 is a schematic diagram of a sub-frame configuration of an LTE TDD system supporting aggregation of two carriers having different TDD uplink/downlink configurations according to an embodiment of the present invention;
FIG 2 is a schematic diagram showing flexible sub-frame scheduling according to an embodiment of the present invention;
FIG. 3 is a schematic flow chart of a method for transmitting information in a TDD system at a UE side according to an embodiment of the present invention;
FIG. 4 is a schematic configuration diagram of a second sub-frame on a first carrier according to an embodiment of the present invention;
FIG 5 is another schematic configuration diagram of the second sub-frame on the first carrier according to an embodiment of the present invention;
FIG. 6 is a schematic flow chart of a method for transmitting information in a TDD system in an application scenario of a flexible sub-frame according to an embodiment of the present invention;
FIG. 7 is a schematic configuration diagram of a second sub-frame in a scenario of a flexible sub-frame according to an embodiment of the present invention;
FIG. 8 is another schematic flow chart of a method for transmitting information in a TDD system at a UE side according to an embodiment of the present invention;
FIG. 9 is a schematic flow chart of a method for transmitting information in a TDD system at a base station side according to an embodiment of the present invention;
FIG 10 is another schematic flow chart of a method for transmitting information in a TDD system at a base station side according to an embodiment of the present invention;
FIG. 11 is a schematic structural diagram of a UE according to an embodiment of the present invention;
FIG. 12 is a schematic structural diagram of another UE according to an embodiment of the present invention;
FIG. 13 is a schematic structural diagram of a base station according to an embodiment of the present invention; and
FIG. 14 is a schematic structural diagram of another base station according to an embodiment of the present invention.

### DESCRIPTION OF EMBODIMENTS

To make the objectives, technical solutions and advantages of the present invention clearer, the embodiments of the present invention are further described in detail in the following with reference to the accompanying drawings.

The embodiments of the present invention relate to an LTE TDD system and an uplink HARQ process. The LTE TDD system may support 7 different TDD uplink/downlink configurations, and specific configurations are shown in Table 1, including a TDD uplink/downlink configuration 0 to a TDD uplink/downlink configuration 6. D indicates a downlink sub-frame, U indicates an uplink sub-frame, and S indicates a special sub-frame, but may be used for downlink transmission, and therefore, may be regarded as a downlink sub-frame.

**Table 1**

| **Uplink/Downlink Configuration Sequence Number** | **Switching Period from Downlink to Uplink** | **Sub-frame Number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Table 1 indicates that each sub-frame in the 7 TDD uplink/downlink configurations is specifically an uplink sub-frame or a downlink sub-frame. For example, when a configuration 1 is adopted, uplink sub-frames are sub-frames 2, 3, 7, and 8, and downlink sub-frames are sub-frames 0, 1, 4, 5, 6, and 9.

In the uplink HARQ process, an involved time sequence relationship between a UL_grant and a PUSCH scheduled by the UL_grant indicates a PUSCH of each uplink sub-frame in the 7 TDD uplink/downlink configurations is scheduled by a UL_grant of which downlink sub-frame. The time sequence relationship may be preset as required. Multiple time sequence relationships are available, which are not specifically limited in the embodiments of the present invention, for example, may be shown in Table 2.

**Table 2**

| **TDD Uplink/Downlink Configuration** | **Downlink Sub-frame Number** | | | | | | | | | |
|---|---|---|---|---|---|---|---|---|---|---|
| | 0 | 1 | 2 | 3 | 4 | 5 | 6 | 7 | 8 | 9 |
| 0 | | | 5, 6 | 6 | 0 | | | 0, 1 | 1 | 5 |
| 1 | | | 6 | 9 | | | | 1 | 4 | |
| 2 | | | 8 | | | | | 3 | | |
| 3 | | | 8 | 9 | 0 | | | | | |
| 4 | | | 8 | 9 | | | | | | |
| 5 | | | 8 | | | | | | | |
| 6 | | | 5 | 6 | 9 | | | 0 | 1 | |

For example, it can be known from Table 2 that, a PUSCH of an uplink sub-frame 2 in a TDD uplink/downlink configuration 1 is scheduled by a UL_grant on a downlink sub-frame 6.

In the uplink HARQ process, an involved time sequence relationship between a PUSCH and a PHICH corresponding to the PUSCH indicates a PHICH corresponding to a PUSCH of each uplink sub-frame in the 7 TDD uplink/downlink configurations is sent in which downlink sub-frame. The time sequence relationship may be preset as required. Multiple time sequence relationships are available, which are not limited in the embodiments of the present invention, for example, may be shown in Table 3.

**Table 3**

| **TDD Uplink/Downlink Configuration** | **Downlink Sub-frame Number** | | | | | | | | | |
|---|---|---|---|---|---|---|---|---|---|---|
| | 0 | 1 | 2 | 3 | 4 | 5 | 6 | 7 | 8 | 9 |
| 0 | | | 6 | 0 | 0 | | | 1 | 5 | 6 |
| 1 | | | 6 | 9 | | | | 1 | 4 | |
| 2 | | | 8 | | | | | 3 | | |
| 3 | | | 8 | 9 | 0 | | | | | |
| 4 | | | 8 | 9 | | | | | | |
| 5 | | | 8 | | | | | | | |
| 6 | | | 6 | 9 | 0 | | | 4 | 5 | |

For example, it can be known from Table 3 that, a PHICH corresponding to a PUSCH of an uplink sub-frame 2 in a TDD uplink/downlink configuration 2 is sent in a downlink sub-frame 8.

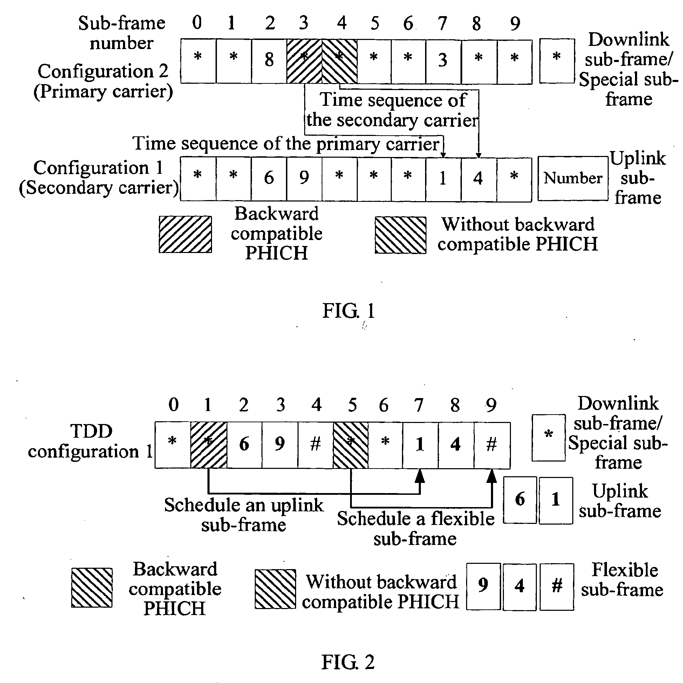

The LTE TDD system in the embodiments of the present invention has different versions, and includes but is not limited to: a version that supports only one carrier, a version that supports a CA technology but only supports carrier aggregation where carriers all have a same TDD uplink/downlink configuration, a version that supports a CA technology and supports carrier aggregation where carriers have different TDD uplink/downlink configurations, and so on. For example, referring to FIG. 1, FIG. 1 is a schematic diagram of a sub-frame configuration of an LTE TDD system supporting aggregation of two carriers having different TDD uplink/downlink configurations, where a primary carrier uses a TDD uplink/downlink configuration 2, and a secondary carrier uses a TDD uplink/downlink configuration 1.

The CA technology involves multiple carriers, where the number of the carriers is at least 2, for example, may be 2, 3, 4, 5, or the like, and the number of the carriers is not specifically limited in the embodiments of the present invention. Multiple carriers of the CA include a primary carrier and a secondary carrier, where one is the primary carrier, and others all are secondary carriers. LTE TDD versions supporting the CA technology all support a cross-carrier scheduling mechanism, allowing a PDCCH and a PHICH corresponding to data on one carrier to be borne on another carrier. In the LTE TDD system supporting the CA technology, a secondary carrier may use its own uplink scheduling time sequence, or may also use an uplink scheduling time sequence of the primary carrier. For example, referring to FIG. 1, a scheduling time sequence of a PUSCH of an uplink sub-frame 8 of the secondary carrier keeps the uplink scheduling time sequence of the secondary carrier, and scheduling is performed by using a UL_grant on a downlink sub-frame 4 of the primary carrier; and a scheduling time sequence of a PUSCH of an uplink sub-frame 7 of the secondary carrier is the same as the uplink scheduling time sequence of the primary carrier, and scheduling is performed by using a UL_grant on a downlink sub-frame 3 of the primary carrier.

For ease of description, in the embodiments of the present invention, the foregoing LTE TDD systems are differentiated by using a first version, a second version, and a third version, where the first version refers to the version that supports only one carrier, the second versions refers to the version that supports the CA technology but only supports the carrier aggregation where the carriers all have the same TDD uplink/downlink configuration, and the third version refers to the version that supports the CA technology and supports the carrier aggregation where the carriers have different TDD uplink/downlink configurations.

In the embodiments of the present invention, the LTE TDD system of the third version further supports a flexible sub-frame, where one or more sub-frames in a TDD uplink/downlink configuration may be set to a flexible sub-frame; and a flexible sub-frame refers to that the sub-frame is not fixedly an uplink sub-frame or a downlink sub-frame, and may be used as an uplink sub-frame in a certain time period, or be used as a downlink sub-frame in a certain time period. For example, referring to FIG. 2, in a TDD uplink/downlink configuration 1, sub-frames 3, 4, 8, and 9 are set to flexible sub-frames, where a PUSCH on the sub-frame 9 is scheduled by a UL_grant on a downlink sub-frame 5.

In the embodiments of the present invention, for a PUSCH sent by a UE, a base station sends a corresponding PHICH to feed back whether the PUSCH is correctly received. The PHICH is sent by using a PHICH resource in a downlink sub-frame. In some TDD uplink/downlink configurations, a downlink sub-frame where a UL_grant scheduling a PUSCH of an uplink sub-frame is located reserves a PHICH resource, while another downlink sub-frame does not have a PHICH resource. For example, referring to FIG 2, a PUSCH on an uplink sub-frame 7 is scheduled by a UL_grant on a downlink sub-frame 1, the downlink sub-frame 1 has a PHICH resource, a PUSCH on a flexible sub-frame 9 is scheduled by a UL_grant on a downlink sub-frame 5, and the downlink sub-frame 5 does not have a PHICH resource.

PHICH resources in the LTE TDD system of the third version include a backward compatible PHICH resource and a non-backward compatible PHICH resource, where the backward compatible PHICH resource refers to a PHICH resource which is identifiable to a UE in a TDD system whose version is lower than the third version, and the non-backward compatible PHICH resource refers to a PHICH resource which is unidentifiable to a UE in a TDD system whose version is lower than the third version, where the version lower than the third version includes the first version and the second version. In the embodiments of the present invention, for ease of description, the backward compatible PHICH resource in the LTE TDD system of the third version is referred to as a backward compatible PHICH resource for short, which is not stated particularly in the following. TDD systems mentioned in the following embodiments of the present invention all refer to the LTE TDD system of the third version, which is referred to as a TDD system for short and is not stated one by one in the following.

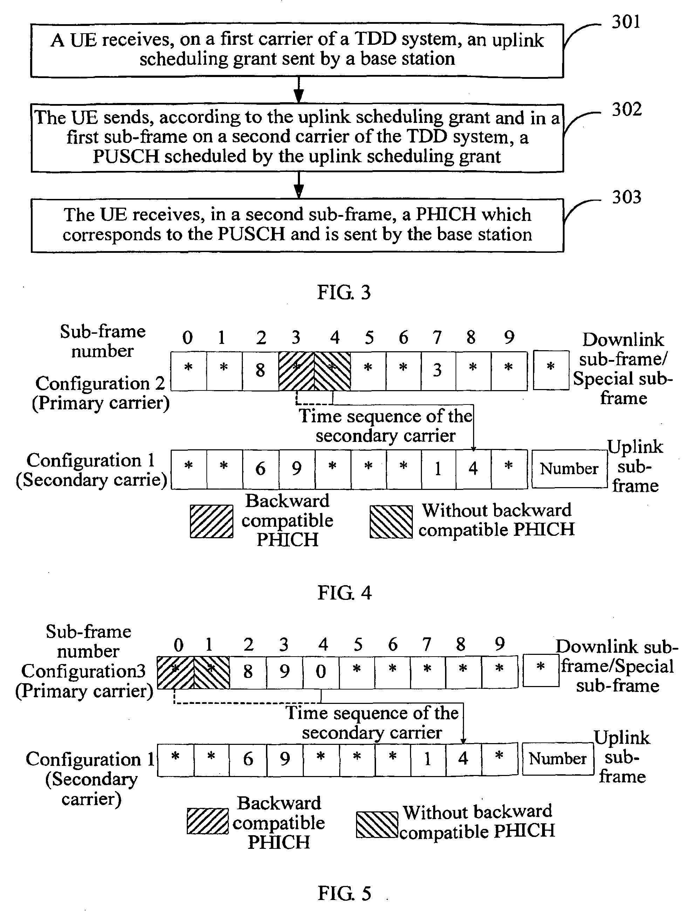

Referring to FIG. 3, to solve a problem that a base station cannot feed back a PHICH to a UE because there is no PHICH resource, an embodiment of the present invention provides a method for transmitting information in a TDD system, where the method includes:
301: A UE receives, on a first carrier of a TDD system, an uplink scheduling grant sent by a base station.
302: The UE sends, according to the uplink scheduling grant and in a first sub-frame on a second carrier of the TDD system, a PUSCH scheduled by the uplink scheduling grant.
303: The UE receives, in a second sub-frame, a PHICH which corresponds to the PUSCH and is sent by the base station.

The first carrier and the second carrier have different TDD uplink/downlink configurations.

The second sub-frame is a sub-frame on the first carrier and has a backward compatible PHICH resource, or the second sub-frame is a sub-frame on the second carrier and has a backward compatible PHICH resource.

Under a precondition of ensuring that a TDD uplink/downlink configuration of the first carrier is different from a TDD uplink/downlink configuration of the second carrier, both the TDD uplink/downlink configuration of the first carrier and the TDD uplink/downlink configuration of the second carrier may be any configuration in Table 1, which is not specifically limited in the embodiment of the present invention.

Optionally, the first sub-frame on the second carrier is an uplink sub-frame whose sub-frame number is k, and a sub-frame on the first carrier whose sub-frame number is k is a downlink sub-frame; and k is any integer of 0 to 9.

Optionally, 303 specifically includes:
when the UE determines, according to a first time sequence relationship, that a sub-frame on the first carrier where the PHICH corresponding to the PUSCH is located does not have the backward compatible PHICH resource, receiving, by the UE and in the second sub-frame, the PHICH which corresponds to the PUSCH and is sent by the base station.

The first time sequence relationship is a time sequence relationship which is between the PUSCH and the PHICH of the first sub-frame and is obtained according to the TDD uplink/downlink configuration of the second carrier. As described above, the first time sequence relationship may be set as required, includes but is not limited to the time sequence relationship shown in Table 3, and is not specifically limited in the embodiment of the present invention. A sub-frame which is obtained according to the time sequence relationship between the PUSCH and the PHICH and is on the first carrier where the PHICH corresponding to the scheduled PUSCH is located may be an uplink sub-frame, or may also be a downlink sub-frame.

Optionally, the TDD uplink/downlink configuration of the first carrier has M uplink sub-frames, which are scheduled by M corresponding downlink sub-frames on the first carrier, the M downlink sub-frames on the first carrier all have a backward compatible PHICH resource, and the second sub-frame is any downlink sub-frame in the M downlink sub-frames on the first carrier, where M is a natural number that is not greater than 10.

Alternatively, the TDD uplink/downlink configuration of the second carrier has N uplink sub-frames, which are scheduled by N corresponding downlink sub-frames on the second carrier, the N downlink sub-frames on the second carrier all have a backward compatible PHICH resource, and the second sub-frame is any downlink sub-frame in the N downlink sub-frames on the second carrier, where N is a natural number that is not greater than 10.

Preferably, a sub-frame in the M or N downlink sub-frames may be selected, so that a delay from a corresponding PHICH to PUSCH or a delay from a corresponding UL_grant to PUSCH is the shortest, and an interval of at least 4 sub-frames is ensured.

Optionally, the second sub-frame is a sub-frame on the first carrier and has a backward compatible PHICH resource, and 301 specifically includes: receiving, by the UE, in a third sub-frame of the first carrier of the TDD system, the uplink scheduling grant sent by the base station, where a sub-frame number of the third sub-frame is the same as that of the second sub-frame, thereby ensuring that the UL_grant and the PHICH that correspond to the PUSCH are transmitted in a sub-frame with a same number, and achieving simple implementation.

For example, referring to FIG 4, an LTE TDD system includes a primary carrier and a secondary carrier, which use TDD uplink/downlink configurations 2 and 1 respectively, and adopt the time sequence relationship shown in Table 3, and an uplink sub-frame 8 of the secondary carrier uses the TDD uplink/downlink configuration of the secondary carrier. First, the UE receives, in a downlink sub-frame 4 on the primary carrier, a UL_grant sent by the base station; the UE sends, according to the UL_grant and in an uplink sub-frame 8 on the secondary carrier, a PUSCH corresponding to the UL_grant; the UE determines, according to the time sequence relationship shown in Table 3, that a PHICH corresponding to the PUSCH uses a sub-frame 4 of the primary carrier, where the sub-frame 4 is a downlink sub-frame; because only sub-frames 3 and 8 on the primary carrier have a backward compatible PHICH resource while the sub-frame 4 does not have a backward compatible PHICH resource, the UE may receive the PHICH corresponding to the PUSCH by using the sub-frame 3 of the primary carrier, so as to complete correct receiving of the PHICH. Furthermore, the UE may further adjust a sub-frame number of a sending sub-frame of the UL_grant scheduling the sub-frame 8 of the secondary carrier to be the same as a sub-frame number of a sending sub-frame of the PHICH corresponding to the PUSCH, that is, adjust from an original sub-frame 4 to a sub-frame 3, so that in a subsequent uplink HARQ process, the UE receives, in the sub-frame 3 of the primary carrier, the UL_grant sent by the base station, and receives, in the sub-frame 3 of the primary carrier, the PHICH which corresponds to the PUSCH and is sent by the base station.

FIG. 4 shows an example in which a sub-frame which is obtained according to the time sequence relationship between the PUSCH and the PHICH and is on the first carrier where the PHICH corresponding to the scheduled PUSCH is located is a downlink sub-frame. An example in which a sub-frame which is determined according to the time sequence relationship and is on the first carrier is an uplink sub-frame is taken in the following. Referring to FIG 5, an LTE TDD system includes a primary carrier and a secondary carrier, which use TDD uplink/downlink configurations 3 and 1 respectively, and adopt the time sequence relationship shown in Table 3, and an uplink sub-frame 8 on the secondary carrier uses the TDD uplink/downlink configuration of the secondary carrier. First, it can be known from the time sequence relationship between the PUSCH and the UL_grant that, a PUSCH on a sub-frame 8 on the secondary carrier is scheduled by a UL_grant on a sub-frame 4 of the primary carrier, the sub-frame 4 on the primary carrier is an uplink sub-frame, a base station cannot send a UL_grant, and therefore, a UE may select one downlink sub-frame in a downlink sub-frame that can bear the UL_grant to receive the UL_grant, for example, sub-frames 0, 8, and 9 in a configuration 3 all may bear the UL_grant, and the UE may select a sub-frame 0 that is the closest to the sub-frame 4 in terms of a time sequence and has an interval of more than 4 sub-frames, so as to receive, in the sub-frame 0, the UL_grant sent by the base station; the UE sends, according to the UL_grant and in the sub-frame 8 on the secondary carrier, a PUSCH corresponding to the UL_grant, and determines, according to the time sequence relationship shown in Table 3, that the PHICH corresponding to the PUSCH uses the sub-frame 4 of the primary carrier, where the sub-frame 4 is an uplink sub-frame and does not have a backward compatible PHICH resource, and therefore, cannot bear the PHICH; and because the sub-frame 0 on the primary carrier may bear the UL_grant and has a backward compatible PHICH resource, the UE may use the sub-frame 0 of the primary carrier to receive the PHICH corresponding to the PUSCH, so as to complete correct receiving of the PHICH.

In addition, optionally, the second sub-frame in this embodiment may be located on the second carrier, and the PHICH is located in a PDSCH (Physical Downlink Shared Channel, physical downlink shared channel) area in the second sub-frame on the second carrier. This may avoid reserving a PHICH resource in a control channel area of the second carrier, thereby implementing inter-cell PHICH interference coordination; and may keep a simple time sequence between the PHICH and the PUSCH corresponding to the PHICH without introducing a new time sequence relationship.

For example, referring to FIG 4, the UE may use a sub-frame 1 or a sub-frame 4 on the secondary carrier to receive the PHICH. Referring to FIG. 5, the UE may use a sub-frame 1 or a sub-frame 4 on the secondary carrier to receive the PHICH.

In the method for transmitting information in a TDD system provided in this embodiment, in a cross-carrier scheduling scenario where multiple carriers have different TDD uplink/downlink configurations, the UE receives the PHICH by using the second sub-frame having a backward compatible PHICH resource on the first carrier or the second carrier, thereby implementing correct receiving of the PHICH, and solving a problem in the prior art that a PHICH cannot be fed back because there is no PHICH resource. Moreover, it is not required to reserve a non-backward compatible PHICH resource, and the PHICH is transmitted by adopting a backward compatible PHICH resource, thereby saving an overhead of a PHICH resource, and solving a problem in the prior art that an overhead is increased because a non-backward compatible PHICH resource is reserved.

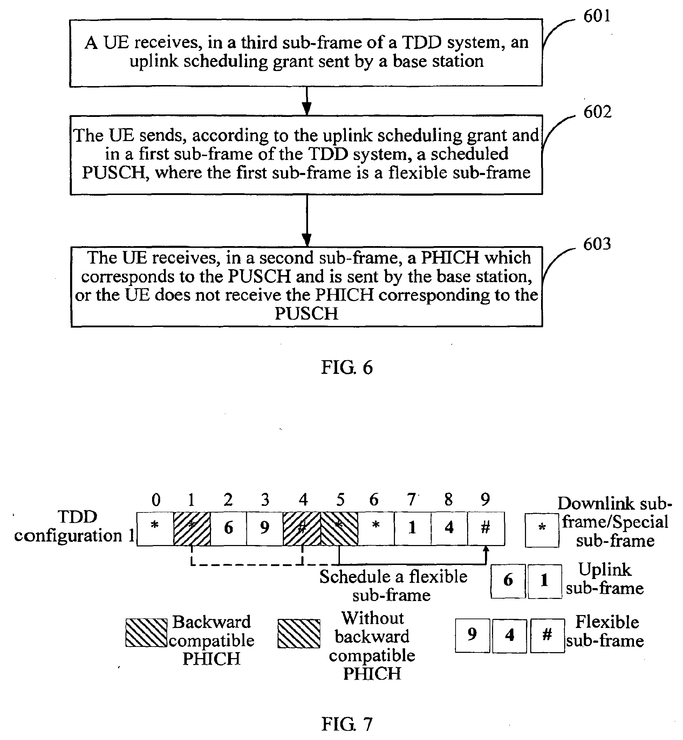

In addition, referring to FIG. 6, to solve a problem that in a scenario of a flexible sub-frame, a base station cannot feed back a PHICH to a UE because there is no PHICH resource, another embodiment of the present invention provides a method for transmitting information in a TDD system, where the method is applied to a TDD system using one carrier and including a flexible sub-frame, and specifically includes:
601: A UE receives, in a third sub-frame of a TDD system, an uplink scheduling grant sent by a base station.
602: The UE sends, according to the uplink scheduling grant and in a first sub-frame of the TDD system, a PUSCH scheduled by the uplink scheduling grant, where the first sub-frame is a flexible sub-frame.
603: The UE receives, in a second sub-frame, a PHICH which corresponds to the PUSCH and is sent by the base station, or the UE does not receive a PHICH corresponding to the PUSCH.

The second sub-frame is a downlink sub-frame or a flexible sub-frame, and the second sub-frame has a backward compatible PHICH resource, or a control channel area in the second sub-frame does not have a backward compatible PHICH resource, but a PDSCH area of the second sub-frame has a backward compatible PHICH resource.

Referring to FIG 7, a carrier of an LTE TDD system adopts a TDD uplink/downlink configuration 1, including 4 flexible sub-frames which are sub-frames 3, 4, 8, and 9, and a PUSCH on the sub-frame 9 is scheduled by a UL_grant on a sub-frame 5. First, the UE receives, in the sub-frame 5, the UL_grant, and sends, on the sub-frame 9, the scheduled PUSCH according to the UL_grant; because the sub-frame 5 does not have a backward compatible PHICH resource while sub-frames 1, 4, 6, and 9 have a backward compatible PHICH resource, the UE may receive, on the sub-frame 1, a PHICH corresponding to the PUSCH, where the sub-frame 1 is a fixed downlink sub-frame; or the UE may receive, on the sub-frame 4, the PHICH corresponding to the PUSCH, where the sub-frame 4 is a flexible sub-frame; or the UE may receive, on the sub-frame 5, the PHICH, where the sub-frame 5 is a fixed downlink sub-frame and a minimum delay between the PHICH and the PUSCH corresponding to the PHICH may be ensured, but the sub-frame 5 does not have a backward compatible PHICH resource; therefore, a PHICH resource on the sub-frame 5 is a non-backward compatible PHICH resource, which is only identifiable to a UE in a TDD system of a high version, for example, a third version, and the non-backward compatible PHICH resource may be placed in a PDSCH area rather than a control channel area in a TDD system of a lower version; or the UE does not receive the PHICH corresponding to the PUSCH, and correspondingly, the base station does not send the PHICH.

In the method provided in this embodiment, in a scenario of a flexible sub-frame, utilization efficiency of a PHICH resource may be improved, and an overhead of a PHICH resource may be saved.

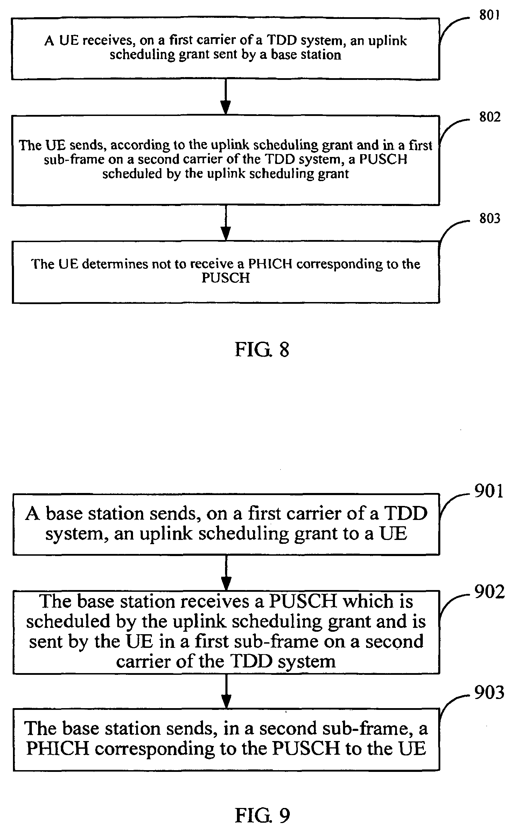

Referring to FIG. 8, still another embodiment of the present invention provides a method for transmitting information in a time division duplexing TDD system, where the method includes:
801: A UE receives, on a first carrier of a TDD system, an uplink scheduling grant sent by a base station.
802: The UE sends, according to the uplink scheduling grant and in a first sub-frame on a second carrier of the TDD system, a physical uplink shared channel PUSCH scheduled by the uplink scheduling grant.
803: The UE determines not to receive a PHICH corresponding to the PUSCH.

The first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9.

Optionally, 803 may specifically include:
when the UE determines, according to a first time sequence relationship, that a sub-frame on the first carrier where the PHICH corresponding to the PUSCH is located does not have a backward compatible PHICH resource, determining, by the UE, not to receive the PHICH corresponding to the PUSCH, where the first time sequence relationship is a time sequence relationship which is between the PUSCH and the PHICH of the first sub-frame and is obtained according to a TDD uplink/downlink configuration of the second carrier.

In the method for transmitting information in a TDD system provided in this embodiment, in a cross-carrier scheduling scenario where multiple carriers have different TDD uplink/downlink configurations, the UE does not receive the PHICH, and because the UL_grant has an NDI (New Data Indicator, new data indicator), which may instruct the UE to transmit a new data packet or retransmit a previous data packet, an uplink HARQ process may also be completed. Moreover, it is not required to reserve a non-backward compatible PHICH resource, thereby saving an overhead of a PHICH resource.

Referring to FIG. 9, another embodiment of the present invention provides a method for transmitting information in a time division duplexing TDD system, where the method includes:
901: A base station sends, on a first carrier of a TDD system, an uplink scheduling grant to a UE.
902: The base station receives a PUSCH which is scheduled by the uplink scheduling grant and is sent by the UE in a first sub-frame on a second carrier of the TDD system.
903: The base station sends, in a second sub-frame, a PHICH corresponding to the PUSCH to the UE.

The first carrier and the second carrier have different TDD uplink/downlink configurations.

The second sub-frame is a sub-frame on the first carrier and has a backward compatible PHICH resource, or the second sub-frame is a sub-frame on the second carrier and has a backward compatible PHICH resource.

Optionally, the first sub-frame on the second carrier is an uplink sub-frame whose sub-frame number is k, and a sub-frame on the first carrier whose sub-frame number is k is a downlink sub-frame; and k is any integer of 0 to 9.

Optionally, 903 may specifically include:
when the base station determines, according to a first time sequence relationship, that a sub-frame on the first carrier where the PHICH corresponding to the PUSCH is located does not have a backward compatible PHICH resource, sending, by the base station and in the second sub-frame, the PHICH corresponding to the PUSCH to the UE, where the first time sequence relationship is a time sequence relationship which is between the PUSCH and the PHICH of the first sub-frame and is obtained according to a TDD uplink/downlink configuration of the second carrier.

Optionally, a TDD uplink/downlink configuration of the first carrier has M uplink sub-frames, which are scheduled by M corresponding downlink sub-frames on the first carrier, the M downlink sub-frames on the first carrier all have a backward compatible PHICH resource, and the second sub-frame is any downlink sub-frame in the M downlink sub-frames on the first carrier, where M is a natural number that is not greater than 10.

Alternatively, an uplink/downlink sub-frame configuration of the second carrier has N uplink sub-frames, which are scheduled by N corresponding downlink sub-frames on the second carrier, the N downlink sub-frames on the second carrier all have a backward compatible PHICH resource, and the second sub-frame is any downlink sub-frame in the N downlink sub-frames on the second carrier, where N is a natural number that is not greater than 10.

Optionally, the second sub-frame is a sub-frame on the first carrier and has a backward compatible PHICH resource, and 901 specifically includes:
sending, by the base station, in a third sub-frame on the first carrier of the TDD system, the uplink scheduling grant to the UE, where a sub-frame number of the third sub-frame is the same as that of the second sub-frame, thereby ensuring that the UL_grant and the PHICH that correspond to the PUSCH are transmitted in a sub-frame with a same number, and achieving simple implementation.

Optionally, the method may further include:
adjusting, by the base station, the sub-frame number of the sub-frame for sending the uplink scheduling grant to be the sub-frame number of the second sub-frame, so that the base station subsequently sends, in the second sub-frame, the uplink scheduling grant to the UE, where the uplink scheduling grant and the PHICH are sent by using a same downlink sub-frame, so that maintenance is convenient, and management is easy.

In the method for transmitting information in a TDD system provided in this embodiment, in a cross-carrier scheduling scenario where multiple carriers have different TDD uplink/downlink configurations, the base station sends the PHICH by using the second sub-frame having a backward compatible PHICH resource on the first carrier or the second carrier, thereby implementing feedback of the PHICH, and solving a problem in the prior art that the PHICH cannot be fed back because there is no PHICH resource. Moreover, it is not required to reserve a non-backward compatible PHICH resource, and the PHICH is transmitted by adopting a backward compatible PHICH resource, thereby saving an overhead of a PHICH resource, and solving a problem in the prior art that an overhead is increased because a non-backward compatible PHICH resource is reserved.

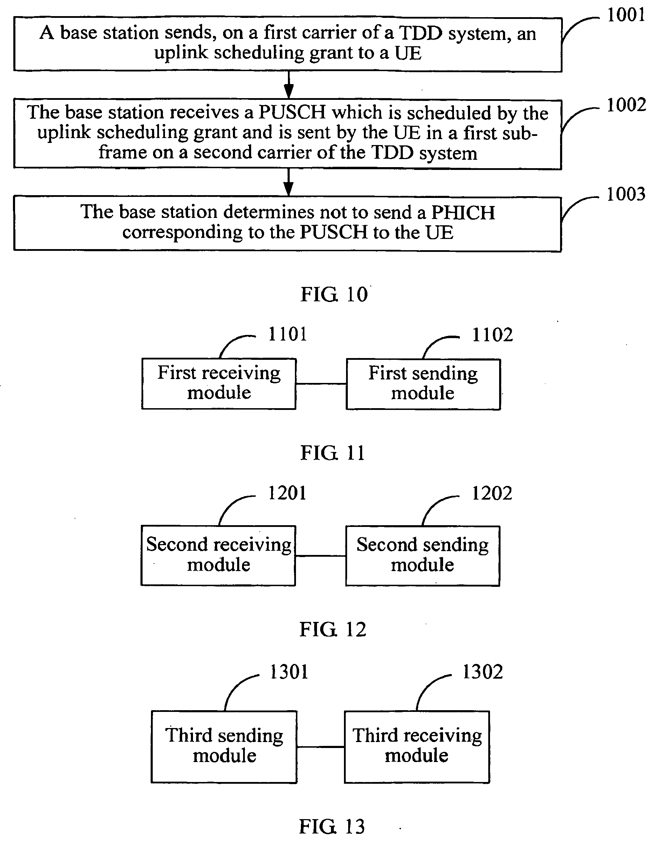

Referring to FIG. 10, another embodiment of the present invention provides a method for transmitting information in a time division duplexing TDD system, where the method includes:
1001: A base station sends, on a first carrier of a TDD system, an uplink scheduling grant to a UE.
1002: The base station receives a PUSCH which is scheduled by the uplink scheduling grant and is sent by the UE in a first sub-frame on a second carrier of the TDD system.
1003: The base station determines not to send a PHICH corresponding to the PUSCH to the UE.

The first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9.

Optionally, 1003 may specifically include:
when the base station determines, according to a first time sequence relationship, that a sub-frame on the first carrier where the PHICH corresponding to the PUSCH is located does not have a backward compatible PHICH resource, not sending, by the base station, the PHICH corresponding to the PUSCH to the UE, where the first time sequence relationship is a time sequence relationship which is between the PUSCH and the PHICH of the first sub-frame and is obtained according to a TDD uplink/downlink configuration of the second carrier.

In the method for transmitting information in a TDD system provided in this embodiment, in a cross-carrier scheduling scenario where multiple carriers have different TDD uplink/downlink configurations, the base station does not send the PHICH to the UE, and because the UL_grant has an NDI, which may instruct the UE to transmit a new data packet or retransmit a previous data packet, an uplink HARQ process may also be completed. Moreover, it is not required to reserve a non-backward compatible PHICH resource, thereby saving an overhead of a PHICH resource.

Referring to FIG. 11, another embodiment of the present invention provides a user equipment UE, which can implement the method performed by the UE shown in FIG. 3, and includes:
a first receiving module 1101, configured to receive, on a first carrier of a time division duplexing TDD system, an uplink scheduling grant sent by a base station, and receive, in a second sub-frame, a PHICH which corresponds to a PUSCH and is sent by the base station; and
a first sending module 1102, configured to send, according to the uplink scheduling grant received by the first receiving module 1101 and in a first sub-frame on a second carrier of the TDD system, the physical uplink shared channel PUSCH scheduled by the uplink scheduling grant, where
the first carrier and the second carrier have different TDD uplink/downlink. configurations; and
the second sub-frame is a sub-frame on the first carrier and has a backward compatible PHICH resource, or the second sub-frame is a sub-frame on the second carrier and has a backward compatible PHICH resource.

Optionally, the first sub-frame on the second carrier is an uplink sub-frame whose sub-frame number is k, and a sub-frame on the first carrier whose sub-frame number is k is a downlink sub-frame; and k is any integer of 0 to 9.

Optionally, the first receiving module 1101 is specifically configured to: when it is determined, according to a first time sequence relationship, that a sub-frame on the first carrier where the PHICH corresponding to the PUSCH is located does not have the backward compatible PHICH resource, receive, in the second sub-frame, the PHICH which corresponds to the PUSCH and is sent by the base station, where the first time sequence relationship is a time sequence relationship which is between the PUSCH and the PHICH of the first sub-frame and is obtained according to a TDD uplink/downlink configuration of the second carrier.

Optionally, a TDD uplink/downlink configuration of the first carrier has M uplink sub-frames, which are scheduled by M corresponding downlink sub-frames on the first carrier, the M downlink sub-frames on the first carrier all have a backward compatible PHICH resource, and the second sub-frame is any downlink sub-frame in the M downlink sub-frames on the first carrier, where M is a natural number that is not greater than 10.

Alternatively, the TDD uplink/downlink configuration of the second carrier has N uplink sub-frames, which are scheduled by N corresponding downlink sub-frames on the second carrier, the N downlink sub-frames on the second carrier all have a backward compatible PHICH resource, and the second sub-frame is any downlink sub-frame in the N downlink sub-frames on the second carrier, where N is a natural number that is not greater than 10.

Optionally, if the second sub-frame is a sub-frame on the first carrier and has a backward compatible PHICH resource, correspondingly, the first receiving module 1101 is specifically configured to: receive, in a third sub-frame on the first carrier of the TDD system, the uplink scheduling grant sent by the base station, where a sub-frame number of the third sub-frame is the same as that of the second sub-frame, thereby ensuring that the UL_grant and the PHICH that correspond to the PUSCH are transmitted in a sub-frame with a same number, and achieving simple implementation.

In a cross-carrier scheduling scenario where multiple carriers have different TDD uplink/downlink configurations, the UE provided in this embodiment receives the PHICH by using the second sub-frame having a backward compatible PHICH resource on the first carrier or the second carrier, thereby implementing receiving of the PHICH, and solving a problem in the prior art that the PHICH cannot be fed back because there is no PHICH resource. Moreover, it is not required to reserve a non-backward compatible PHICH resource, and the PHICH is transmitted by adopting a backward compatible PHICH resource, thereby saving an overhead of a PHICH resource, and solving a problem in the prior art that an overhead is increased because a non-backward compatible PHICH resource is reserved.

Referring to FIG. 12, another embodiment of the present invention provides a user equipment UE, which can implement the method performed by the UE shown in FIG 8, and includes:
a second receiving module 1201, configured to receive, on a first carrier of a time division duplexing TDD system, an uplink scheduling grant sent by a base station, and determine not to receive a PHICH corresponding to a PUSCH; and
a second sending module 1202, configured to send, according to the uplink scheduling grant received by the second receiving module 1201 and in a first sub-frame on a second carrier of the TDD system, the physical uplink shared channel PUSCH scheduled by the uplink scheduling grant, where
the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9.

Optionally, the second receiving module 1201 is specifically configured to: when it is determined, according to a first time sequence relationship, that a sub-frame on the first carrier where the PHICH corresponding to the PUSCH is located does not have a backward compatible PHICH resource, determine not to receive the PHICH corresponding to the PUSCH, where the first time sequence relationship is a time sequence relationship which is between the PUSCH and the PHICH of the first sub-frame and is obtained according to a TDD uplink/downlink configuration of the second carrier.

In a cross-carrier scheduling scenario where multiple carriers have different TDD uplink/downlink configurations, the UE provided in this embodiment does not receive the PHICH, and because the UL_grant has an NDI, which may instruct the UE to transmit a new data packet or retransmit a previous data packet, an uplink HARQ process may also be completed. Moreover, it is not required to reserve a non-backward compatible PHICH resource, thereby saving an overhead of a PHICH resource.

Referring to FIG 13, another embodiment of the present invention provides a base station, which can implement the method performed by the base station shown in FIG. 9, and includes:
a third sending module 1301, configured to send, on a first carrier of a time division duplexing TDD system, an uplink scheduling grant to a user equipment UE, and send, in a second sub-frame, a PHICH corresponding to a PUSCH to the UE; and
a third receiving module 1302, configured to, after the third sending module 1301 sends the uplink scheduling grant, receive the physical uplink shared channel PUSCH which is scheduled by the uplink scheduling grant and is sent by the UE in a first sub-frame on a second carrier of the TDD system, where
the first carrier and the second carrier have different TDD uplink/downlink configurations; and
the second sub-frame is a sub-frame on the first carrier and has a backward compatible PHICH resource, or the second sub-frame is a sub-frame on the second carrier and has a backward compatible PHICH resource.

Optionally, the first sub-frame on the second carrier is an uplink sub-frame whose sub-frame number is k, and a sub-frame on the first carrier whose sub-frame number is k is a downlink sub-frame; and k is any integer of 0 to 9.

Optionally, the third sending module 1301 is specifically configured to: when it is determined, according to a first time sequence relationship, that a sub-frame on the first carrier where the PHICH corresponding to the PUSCH is located does not have the backward compatible PHICH resource, send, in the second sub-frame, the PHICH corresponding to the PUSCH to the UE, where the first time sequence relationship is a time sequence relationship which is between the PUSCH and the PHICH of the first sub-frame and is obtained according to a TDD uplink/downlink configuration of the second carrier.

Optionally, a TDD uplink/downlink configuration of the first carrier has M uplink sub-frames, which are scheduled by M corresponding downlink sub-frames on the first carrier, the M downlink sub-frames on the first carrier all have a backward compatible PHICH resource, and the second sub-frame is any downlink sub-frame in the M downlink sub-frames on the first carrier, where M is a natural number that is not greater than 10.

Alternatively, the TDD uplink/downlink configuration of the second carrier has N uplink sub-frames, which are scheduled by N corresponding downlink sub-frames on the second carrier, the N downlink sub-frames on the second carrier all have a backward compatible PHICH resource, and the second sub-frame is any downlink sub-frame in the N downlink sub-frames on the second carrier, where N is a natural number that is not greater than 10.

Optionally, if the second sub-frame is a sub-frame on the first carrier and has a backward compatible PHICH resource, correspondingly, the third sending module 1301 is specifically configured to: send, in a third sub-frame on the first carrier of the TDD system, the uplink scheduling grant to the UE, where a sub-frame number of the third sub-frame is the same as that of the second sub-frame.

In a cross-carrier scheduling scenario where multiple carriers have different TDD uplink/downlink configurations, the base station provided in this embodiment sends the PHICH by using the second sub-frame having a backward compatible PHICH resource on the first carrier or the second carrier, thereby implementing feedback of the PHICH, and solving a problem in the prior art that the PHICH cannot be fed back because there is no PHICH resource. Moreover, it is not required to reserve a non-backward compatible PHICH resource, and the PHICH is transmitted by adopting a backward compatible PHICH resource, thereby saving an overhead of a PHICH resource, and solving a problem in the prior art that an overhead is increased because a non-backward compatible PHICH resource is reserved.

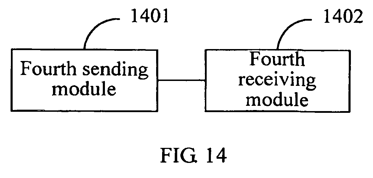

Referring to FIG. 14, another embodiment of the present invention provides a base station, which can implement the method performed by the base station shown in FIG. 10, and includes:
a fourth sending module 1401, configured to send, on a first carrier of a time division duplexing TDD system, an uplink scheduling grant to a user equipment UE, and determine not to send a PHICH corresponding to a PUSCH to the UE; and
a fourth receiving module 1402, configured to, after the fourth sending module 1401 sends the uplink scheduling grant, receive the physical uplink shared channel PUSCH which is scheduled by the uplink scheduling grant and is sent by the UE in a first sub-frame on a second carrier of the TDD system, where
the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9.

Optionally, the fourth sending module 1401 is specifically configured to: when it is determined, according to a first time sequence relationship, that a sub-frame on the first carrier where the PHICH corresponding to the PUSCH is located does not have a backward compatible PHICH resource, determine not to send the PHICH corresponding to the PUSCH to the UE, where the first time sequence relationship is a time sequence relationship which is between the PUSCH and the PHICH of the first sub-frame and is obtained according to a TDD uplink/downlink configuration of the second carrier.

In a cross-carrier scheduling scenario where multiple carriers have different TDD uplink/downlink configurations, the base station provided in this embodiment does not send the PHICH to the UE, and because the UL_grant has an NDI, which may instruct the UE to transmit a new data packet or retransmit a previous data packet, an uplink HARQ process may also be completed. Moreover, it is not required to reserve a non-backward compatible PHICH resource, thereby saving an overhead of a PHICH resource.

The base station involved in any embodiment of the present invention includes but is not limited to: an eNB and so on, which is not specifically limited in the embodiments of the present invention.

Persons of ordinary skill in the art may understand that all or a part of the steps of the foregoing embodiments may be implemented through hardware, and may also be implemented by a program instructing relevant hardware. The program may be stored in a computer readable storage medium. The storage medium may be a read-only memory, a magnetic disk, or an optical disk.

The foregoing description is merely exemplary embodiments of the present invention, but is not intended to limit the present invention. Any modification, equivalent replacement, or improvement made within the principle of the present invention shall fall within the protection scope of the present invention.

## Claims

1. A method for transmitting information in a time division duplexing TDD system, comprising:
receiving, by a user equipment UE and on a first carrier of the time division duplexing TDD system, an uplink scheduling grant sent by a base station;
sending, by the UE, according to the uplink scheduling grant and in a first sub-frame on a second carrier of the TDD system, a physical uplink shared channel PUSCH scheduled by the uplink scheduling grant, said method **characterized in that** the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9; and in the step of
determining, by the UE, not to receive a physical hybrid automatic repeat request indicator channel PHICH corresponding to the PUSCH.

2. The method according to claim 1, wherein the determining, by the UE, not to receive a PHICH corresponding to the PUSCH comprises:
when the UE determines, according to a first time sequence relationship, that a sub-frame on the first carrier where the PHICH corresponding to the PUSCH is located does not have a backward compatible PHICH resource, determining, by the UE, not to receive the PHICH corresponding to the PUSCH, wherein
the first time sequence relationship is a time sequence relationship which is between the PUSCH and the PHICH of the first sub-frame and is obtained according to a TDD uplink/downlink configuration of the second carrier, and the backward compatible PHICH resource is a PHICH resource which is identifiable to a UE in a TDD system whose version is lower than that of the TDD system.

3. A method for transmitting information in a time division duplexing TDD system, comprising:
sending, by a base station and on a first carrier of the time division duplexing TDD system, an uplink scheduling grant to a user equipment UE;
receiving, by the base station, a physical uplink shared channel PUSCH which is scheduled by the uplink scheduling grant and is sent by the UE in a first sub-frame on a second carrier of the TDD system, said method **characterized in that** the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9; and
determining, by the base station, not to send a physical hybrid automatic repeat request indicator channel PHICH corresponding to the PUSCH to the UE.

4. The method according to claim 3, wherein the determining, by the base station, not to send a physical hybrid automatic repeat request indicator channel PHICH corresponding to the PUSCH to the UE comprises:
when the base station determines, according to a first time sequence relationship, that a sub-frame on the first carrier where the PHICH corresponding to the PUSCH is located does not have a backward compatible PHICH resource, determining, by the base station, not to send the PHICH corresponding to the PUSCH to the UE, wherein
the first time sequence relationship is a time sequence relationship which is between the PUSCH and the PHICH of the first sub-frame and is obtained according to a TDD uplink/downlink configuration of the second carrier, and the backward compatible PHICH resource is a PHICH resource which is identifiable to a UE in a TDD system whose version is lower than that of the TDD system.

5. A user equipment, comprising:
a second receiving module (1201), configured to receive, on a first carrier of a time division duplexing TDD system, an uplink scheduling grant sent by a base station, and
a second sending module (1202), configured to send, according to the uplink scheduling grant received by the second receiving module and in a first sub-frame on a second carrier of the TDD system, a physical uplink shared channel PUSCH scheduled by the uplink scheduling grant, said user equipment **characterized in that**
the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9, and the second receiving module is configured to determine not to receive a physical hybrid automatic repeat request indicator channel PHICH corresponding to the PUSCH.

6. The UE according to claim 5, wherein the second receiving module is specifically configured to:
when it is determined, according to a first time sequence relationship, that a sub-frame on the first carrier where the PHICH corresponding to the PUSCH is located does not have a backward compatible PHICH resource, determine not to receive the PHICH corresponding to the PUSCH, wherein
the first time sequence relationship is a time sequence relationship which is between the PUSCH and the PHICH of the first sub-frame and is obtained according to a TDD uplink/downlink configuration of the second carrier, and the backward compatible PHICH resource is a PHICH resource which is identifiable to a UE in a TDD system whose version is lower than that of the TDD system.

7. A base station, comprising:
a fourth sending module (1401), configured to send, on a first carrier of a time division duplexing TDD system, an uplink scheduling grant to a user equipment UE, and
a fourth receiving module (1402), configured to, after the fourth sending module sends the uplink scheduling grant, receive a physical uplink shared channel PUSCH which is scheduled by the uplink scheduling grant and is sent by the UE in a first sub-frame on a second carrier of the TDD system, said base station **characterized in that**
the first carrier and the second carrier have different TDD uplink/downlink configurations; the first sub-frame on the second carrier is an uplink sub-frame whose sub-frame number is k, and a sub-frame on the first carrier whose sub-frame number is k is a downlink sub-frame; and k is any integer of 0 to 9, and the fourth sending module is configured to determine not to send a physical hybrid automatic repeat request indicator channel PHICH corresponding to the PUSCH to the UE.

8. The base station according to claim 7, wherein the fourth sending module is specifically configured to:
when it is determined, according to a first time sequence relationship, that a sub-frame on the first carrier where the PHICH corresponding to the PUSCH is located does not have a backward compatible PHICH resource, determine not to send the PHICH corresponding to the PUSCH to the UE, wherein
the first time sequence relationship is a time sequence relationship which is between the PUSCH and the PHICH of the first sub-frame and is obtained according to a TDD uplink/downlink configuration of the second carrier, and the backward compatible PHICH resource is a PHICH resource which is identifiable to a UE in a TDD system whose version is lower than that of the TDD system.

## Patentansprüche

1. Verfahren zum Übertragen von Informationen in einem Zeitduplex- bzw. TDD-System, umfassend:
Empfangen einer durch eine Basisstation gesendeten Aufwärtsstrecken-Einteilungsgewährung durch ein Benutzergerät UE und auf einem ersten Träger des Zeitduplex- bzw. TDD-Systems;
Senden eines durch die Aufwärtsstrecken-Einteilungsgewährung eingeteilten "Physical Uplink Shared Channel" PUSCH durch das UE gemäß der Aufwärtsstrecken-Einteilungsgewährung und in einem ersten Subrahmen auf einem zweiten Träger des TDD-Systems, wobei das Verfahren **dadurch gekennzeichnet ist, dass** der erste Träger und der zweite Träger verschiedene TDD-Aufwärtsstrecken-/Abwärtsstreckenkonfigurationen aufweisen; der erste Subrahmen auf dem zweiten Träger ein Aufwärtsstrecken-Subrahmen ist, dessen Subrahmennummer k ist, und ein Subrahmen auf dem ersten Träger, dessen Subrahmennummer k ist, ein Abwärtsstrecken-Subrahmen ist; und k eine beliebige ganze Zahl von 0 bis 9 ist; und
durch den folgenden Schritt:
Bestimmen durch das UE, einen dem PUSCH entsprechenden "Physical Hybrid Automatic Repeat Request Indicator Channel" PHICH nicht zu empfangen.

2. Verfahren nach Anspruch 1, wobei das Bestimmen durch das UE, einen dem PUSCH entsprechenden PHICH nicht zu empfangen, Folgendes umfasst:
wenn das UE gemäß einer ersten Zeitsequenzbeziehung bestimmt, dass ein Subrahmen auf dem ersten Träger, wo sich der dem PUSCH entsprechende PHICH befindet, eine rückwärtskompatible PHICH-Ressource nicht aufweist, Bestimmen durch das UE, den dem PUSCH entsprechenden PHICH nicht zu empfangen, wobei die erste Zeitsequenzbeziehung eine Zeitsequenzbeziehung ist, die zwischen dem PUSCH und dem PHICH des ersten Subrahmens besteht und gemäß einer TDD-Aufwärtsstrecken-/Abwärtsstreckenkonfiguration des zweiten Trägers erhalten wird, und die rückwärtskompatible PHICH-Ressource eine PHICH-Ressource ist, die einem UE in einem TDD-System, dessen Version niedriger als die des TDD-Systems ist, identifizierbar ist.

3. Verfahren zum Übertragen von Informationen in einem Zeitduplex- bzw. TDD-System, umfassend:
Senden einer Aufwärtsstrecken-Einteilungsgewährung zu einem Benutzergerät UE durch eine Basisstation und auf einem ersten Träger des Zeitduplex- bzw. TDD-Systems;
Empfangen eines "Physical Uplink Shared Channel" PUSCH durch die Basisstation, der durch die Aufwärtsstrecken-Einteilungsgewährung eingeteilt und durch das UE in einem ersten Subrahmen auf einem zweiten Träger des TDD-Systems gesendet wird, wobei das Verfahren **dadurch gekennzeichnet ist, dass** der erste Träger und der zweite Träger verschiedene TDD-Aufwärtsstrecken-/Abwärtsstreckenkonfigurationen aufweisen; der erste Subrahmen auf dem zweiten Träger ein Aufwärtsstrecken-Subrahmen ist, dessen Subrahmennummer k ist, und ein Subrahmen auf dem ersten Träger, dessen Subrahmennummer k ist, ein Abwärtsstrecken-Subrahmen ist; und k eine beliebige ganze Zahl von 0 bis 9 ist; und
Bestimmen durch die Basisstation, einen dem PUSCH entsprechenden "Physical Hybrid Automatic Repeat Request Indicator Channel" PHICH nicht zu dem UE zu senden.

4. Verfahren nach Anspruch 3, wobei das Bestimmen durch die Basisstation, einen dem PUSCH entsprechenden "Physical Hybrid Automatic Repeat Request Indicator Channel" PHICH nicht zu dem UE zu senden, Folgendes umfasst:
wenn die Basisstation gemäß einer ersten Zeitsequenzbeziehung bestimmt, dass ein Subrahmen auf dem ersten Träger, wo sich der dem PUSCH entsprechende PHICH befindet, eine rückwärtskompatible PHICH-Ressource nicht aufweist, Bestimmen durch die Basisstation, den dem PUSCH entsprechenden PHICH nicht zu dem UE zu senden; wobei
die erste Zeitsequenzbeziehung eine Zeitsequenzbeziehung ist, die zwischen dem PUSCH und dem PHICH des ersten Subrahmens besteht und gemäß einer TDD-Aufwärtsstrecken-/Abwärtsstreckenkonfiguration des zweiten Trägers erhalten wird, und die rückwärtskompatible PHICH-Ressource eine PHICH-Ressource ist, die einem UE in einem TDD-System, dessen Version niedriger als die des TDD-Systems ist, identifizierbar ist.

5. Benutzergerät, umfassend:
ein zweites Empfangsmodul (1201), ausgelegt zum Empfangen einer durch eine Basisstation gesendeten Aufwärtsstrecken-Einteilungsgewährung auf einem ersten Träger eines Zeitduplex- bzw. TDD-Systems;
ein zweites Sendemodul (1202), ausgelegt zum Senden eines durch die Aufwärtsstrecken-Einteilungsgewährung eingeteilten "Physical Uplink Shared Channel" PUSCH gemäß der durch das zweite Empfangsmodul empfangenen Aufwärtsstrecken-Einteilungsgewährung und in einem ersten Subrahmen auf einem zweiten Träger des TDD-Systems, wobei das Benutzergerät **dadurch gekennzeichnet ist, dass**
der erste Träger und der zweite Träger verschiedene TDD-Aufwärtsstrecken-/Abwärtsstreckenkonfigurationen aufweisen; der erste Subrahmen auf dem zweiten Träger ein Aufwärtsstrecken-Subrahmen ist, dessen Subrahmennummer k ist, und ein Subrahmen auf dem ersten Träger, dessen Subrahmennummer k ist, ein Abwärtsstrecken-Subrahmen ist; und k eine beliebige ganze Zahl von 0 bis 9 ist, und das zweite Empfangsmodul ausgelegt ist zum Bestimmen, einen dem PUSCH entsprechenden "Physical Hybrid Automatic Repeat Request Indicator Channel" PHICH nicht zu empfangen.

6. UE nach Anspruch 5, wobei das zweite Empfangsmodul spezifisch ausgelegt ist zum:
wenn gemäß einer ersten Zeitsequenzbeziehung bestimmt wird, dass ein Subrahmen auf dem ersten Träger, wo sich der dem PUSCH entsprechende PHICH befindet, eine rückwärtskompatible PHICH-Ressource nicht aufweist, Bestimmen, den dem PUSCH entsprechenden PHICH nicht zu empfangen, wobei
die erste Zeitsequenzbeziehung eine Zeitsequenzbeziehung ist, die zwischen dem PUSCH und dem PHICH des ersten Subrahmens besteht und gemäß einer TDD-Aufwärtsstrecken-/Abwärtsstreckenkonfiguration des zweiten Trägers erhalten wird, und die rückwärtskompatible PHICH-Ressource eine PHICH-Ressource ist, die einem UE in einem TDD-System, dessen Version niedriger als die des TDD-Systems ist, identifizierbar ist.

7. Basisstation, umfassend:
ein viertes Sendemodul (1401), ausgelegt zum Senden einer Aufwärtsstrecken-Einteilungsgewährung zu einem Benutzergerät UE auf einem ersten Träger eines Zeitduplex- bzw. TDD-Systems;
ein viertes Empfangsmodul (1402), ausgelegt zum Empfangen eines "Physical Uplink Shared Channel" PUSCH, der durch die Aufwärtsstrecken-Einteilungsgewährung eingeteilt wird und durch das UE in einem ersten Subrahmen auf einem zweiten Träger des TDD-Systems gesendet wird, nachdem das vierte Sendemodul die Aufwärtsstrecken-Einteilungsgewährung sendet, wobei die Basisstation **dadurch gekennzeichnet ist, dass**
der erste Träger und der zweite Träger verschiedene TDD-Aufwärtsstrecken-/Abwärtsstreckenkonfigurationen aufweisen; der erste Subrahmen auf dem zweiten Träger ein Aufwärtsstrecken-Subrahmen ist, dessen Subrahmennummer k ist, und ein Subrahmen auf dem ersten Träger, dessen Subrahmennummer k ist, ein Abwärtsstrecken-Subrahmen ist; und k eine beliebige ganze Zahl von 0 bis 9 ist, und das vierte Sendemodul ausgelegt ist zum Bestimmen, einen dem PUSCH entsprechenden "Physical Hybrid Automatic Repeat Request Indicator Channel" PHICH nicht zu dem UE zu senden.

8. Basisstation nach Anspruch 7, wobei das vierte Sendemodul spezifisch ausgelegt ist zum:
wenn gemäß einer ersten Zeitsequenzbeziehung bestimmt wird, dass ein Subrahmen auf dem ersten Träger, wo sich der dem PUSCH entsprechende PHICH befindet, eine rückwärtskompatible PHICH-Ressource nicht aufweist, Bestimmen, den dem PUSCH entsprechenden PHICH nicht zu dem UE zu senden, wobei
die erste Zeitsequenzbeziehung eine Zeitsequenzbeziehung ist, die zwischen dem PUSCH und dem PHICH des ersten Subrahmens besteht und gemäß einer TDD-Aufwärtsstrecken-/Abwärtsstreckenkonfiguration des zweiten Trägers erhalten wird, und die rückwärtskompatible PHICH-Ressource eine PHICH-Ressource ist, die einem UE in einem TDD-System, dessen Version niedriger als die des TDD-Systems ist, identifizierbar ist.

## Revendications

1. Procédé pour la transmission d'informations dans a système de duplexage par répartition temporelle, TDD (Time Division Duplexing), comprenant :
la réception, par un équipement utilisateur UE (User Equipment) et sur une première porteuse du système de duplexage par répartition temporelle, TDD, d'une autorisation de planification en liaison montante envoyée par une station de base ;
l'envoi, par l'UE, selon l'autorisation de planification en liaison montante et dans une première sous-trame sur une deuxième porteuse du système TDD, d'un canal partagé de liaison montante physique PUSCH (Physical Uplink Shared Channel) planifié par l'autorisation de planification en liaison montante, ledit procédé étant **caractérisé en ce que** la première porteuse et la deuxième porteuse ont des configurations TDD de liaison montante/descendante différentes ; la première sous-trame sur la deuxième porteuse est une sous-trame de liaison montante dont le numéro de sous-trame est k, et une sous-trame sur la première porteuse dont le numéro de sous-trame est k est une sous-trame de liaison descendante ; et k est un entier quelconque de 0 à 9 ; et par l'étape de
détermination, par l'UE, de ne pas recevoir de canal indicateur de demande de répétition automatique hybride physique PHICH (Physical Hybrid Automatic Repeat Request Indicator Channel) correspondant au canal PUSCH.

2. Procédé selon la revendication 1, dans lequel la détermination, par l'UE, de ne pas recevoir de canal PHICH correspondant au canal PUSCH comprend :
lorsque l'UE détermine, conformément à une première relation de séquence temporelle, qu'une sous-trame sur la première porteuse sur laquelle se trouve le canal PHICH correspondant au canal PUSCH n'a pas de ressource PHICH rétrocompatible, la détermination, par l'UE, de ne pas recevoir le canal PHICH correspondant au canal PUSCH, dans lequel
la première relation de séquence temporelle est une relation de séquence temporelle qui est définie entre le canal PUSCH et le canal PHICH de la première sous-trame et est obtenue conformément à une configuration TDD de liaison montante/descendante de la deuxième porteuse, et la ressource PHICH rétrocompatible est une ressource PHICH qui est identifiable à un UE dans un système TDD dont la version est inférieure à celle du système TDD.

3. Procédé pour la transmission d'informations dans un système de duplexage par répartition temporelle, TDD, comprenant :
l'envoi, par une station de base et sur une première porteuse du système de duplexage par répartition temporelle, TDD, d'une autorisation de planification en liaison montante à un équipement utilisateur UE ;
la réception, par la station de base, d'un canal partagé de liaison montante physique PUSCH qui est planifié par l'autorisation de planification en liaison montante et est envoyé par l'UE dans une première sous-trame sur une deuxième porteuse du système TDD, ledit procédé étant **caractérisé en ce que** la première porteuse et la deuxième porteuse ont des configurations TDD de liaison montante/descendante différentes ; la première sous-trame sur la deuxième porteuse est une sous-trame de liaison montante dont le numéro de sous-trame est k, et une sous-trame sur la première porteuse dont le numéro de sous-trame est k est une sous-trame de liaison descendante ; et k est un entier quelconque de 0 à 9 ; et
la détermination, par la station de base, de ne pas envoyer de canal indicateur de demande de répétition automatique hybride physique PHICH correspondant au canal PUSCH à l'UE.

4. Procédé selon la revendication 3, dans lequel la détermination, par la station de base, de ne pas envoyer de canal indicateur de demande de répétition automatique hybride physique PHICH correspondant au canal PUSCH à l'UE comprend :
lorsque la station de base détermine, conformément à une première relation de séquence temporelle, qu'une sous-trame sur la première porteuse sur laquelle se trouve le canal PHICH correspondant au canal PUSCH n'a pas de ressource PHICH rétrocompatible, la détermination, par la station de base, de ne pas envoyer le canal PHICH correspondant au canal PUSCH à l'UE, dans lequel
la première relation de séquence temporelle est une relation de séquence temporelle qui est définie entre le canal PUSCH et le canal PHICH de la première sous-trame et est obtenue conformément à une configuration TDD de liaison montante/descendante de la deuxième porteuse, et la ressource PHICH rétrocompatible est une ressource PHICH qui est identifiable à un UE dans un système TDD dont la version est inférieure à celle du système TDD.

5. Equipement utilisateur, comprenant :
un deuxième module de réception (1201), configuré pour recevoir, sur une première porteuse d'un système de duplexage par répartition temporelle, TDD, une autorisation de planification en liaison montante envoyée par une station de base ;
un deuxième module d'envoi (1202), configuré pour envoyer, selon l'autorisation de planification en liaison montante reçue par le deuxième module de réception et dans une première sous-trame sur une deuxième porteuse du système TDD, un canal partagé de liaison montante physique PUSCH planifié par l'autorisation de planification en liaison montante, ledit équipement utilisateur étant **caractérisé en ce que**
la première porteuse et la deuxième porteuse ont des configurations TDD de liaison montante/descendante différentes ; la première sous-trame sur la deuxième porteuse est une sous-trame de liaison montante dont le numéro de sous-trame est k, et une sous-trame sur la première porteuse dont le numéro de sous-trame est k est une sous-trame de liaison descendante ; et k est un entier quelconque de 0 à 9, et le deuxième module de réception est configuré pour déterminer de ne pas recevoir de canal indicateur de demande de répétition automatique hybride physique PHICH correspondant au canal PUSCH.

6. UE selon la revendication 5, dans lequel le deuxième module de réception est spécifiquement configuré pour :
lorsqu'il est déterminé, conformément à une première relation de séquence temporelle, qu'une sous-trame sur la première porteuse sur laquelle se trouve le canal PHICH correspondant au canal PUSCH n'a pas de ressource PHICH rétrocompatible, déterminer de ne pas recevoir le canal PHICH correspondant au canal PUSCH, dans lequel
la première relation de séquence temporelle est une relation de séquence temporelle qui est définie entre le canal PUSCH et le canal PHICH de la première sous-trame et est obtenue conformément à une configuration TDD de liaison montante/descendante de la deuxième porteuse, et la ressource PHICH rétrocompatible est une ressource PHICH qui est identifiable à un UE dans un système TDD dont la version est inférieure à celle du système TDD.

7. Station de base, comprenant :
un quatrième module d'envoi (1401), configuré pour envoyer, sur une première porteuse d'un système de duplexage par répartition temporelle, TDD, une autorisation de planification en liaison montante à un équipement utilisateur UE ;
un quatrième module de réception (1402), configuré pour, après que le quatrième module d'envoi a envoyé l'autorisation de planification en liaison montante, recevoir un canal partagé de liaison montante physique PUSCH qui est planifié par l'autorisation de planification en liaison montante et est envoyé par l'UE dans une première sous-trame sur une deuxième porteuse du système TDD, ladite station de base étant **caractérisée en ce que**
la première porteuse et la deuxième porteuse ont des configurations TDD de liaison montante/descendante différentes ; la première sous-trame sur la deuxième porteuse est une sous-trame de liaison montante dont le numéro de sous-trame est k, et une sous-trame sur la première porteuse dont le numéro de sous-trame est k est une sous-trame de liaison descendante ; et k est un entier quelconque de 0 à 9, et le quatrième module d'envoi est configuré pour déterminer de ne pas envoyer de canal indicateur de demande de répétition automatique hybride physique PHICH correspondant au canal PUSCH à l'UE.

8. Station de base selon la revendication 7, dans laquelle le quatrième module d'envoi est spécifiquement configuré pour :
lorsqu'il est déterminé, conformément à une première relation de séquence temporelle, qu'une sous-trame sur la première porteuse sur laquelle se trouve le canal PHICH correspondant au canal PUSCH n'a pas de ressource PHICH rétrocompatible, déterminer de ne pas envoyer le canal PHICH correspondant au canal PUSCH à l'UE, dans lequel
la première relation de séquence temporelle est une relation de séquence temporelle qui est définie entre le canal PUSCH et le canal PHICH de la première sous-trame et est obtenue conformément à une configuration TDD de liaison montante/descendante de la deuxième porteuse, et la ressource PHICH rétrocompatible est une ressource PHICH qui est identifiable à un UE dans un système TDD dont la version est inférieure à celle du système TDD.
